(19) Europäisches Patentamt
European Patent Office
Office européen des brevets

(11) EP 4 008 749 B1

(12) EUROPEAN PATENT SPECIFICATION

(45) Date of publication and mention of the grant of the patent:
**01.05.2024 Bulletin 2024/18**

(21) Application number: **20211292.6**

(22) Date of filing: **02.12.2020**

(51) International Patent Classification (IPC):
*C08L 23/08* (2006.01) *C08K 7/10* (2006.01)
*C08K 3/22* (2006.01) *G02B 1/04* (2006.01)
*C08L 45/00* (2006.01) *C08L 81/06* (2006.01)
*C08L 79/08* (2006.01) *C08J 3/20* (2006.01)
*C08J 3/21* (2006.01) *C08J 5/18* (2006.01)

(52) Cooperative Patent Classification (CPC):
(C-Sets available)
**C08J 3/212; C08J 5/18; C08K 3/22; C08K 7/10; G02B 1/04;** C08J 2323/08; C08J 2345/00; C08J 2379/08; C08J 2381/06; C08K 2003/2227; C08K 2201/003; C08K 2201/004; C08K 2201/005; C08K 2201/006 (Cont.)

(54) **COMPOSITION, METHOD FOR THE MANUFACTURE THEREOF, AND ARTICLES PREPARED THEREFROM**

ZUSAMMENSETZUNG, VERFAHREN ZUR HERSTELLUNG DAVON UND DARAUS HERGESTELLTE ARTIKEL

COMPOSITION, SON PROCÉDÉ DE FABRICATION ET ARTICLES PRÉPARÉS À PARTIR DE LA COMPOSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.06.2022 Bulletin 2022/23**

(73) Proprietor: **SHPP Global Technologies B.V.
4612 PX Bergen op Zoom (NL)**

(72) Inventors:
- **RAMALINGAM, Hariharan
562125 Karnataka (IN)**
- **WANG, Zheng
Shanghai, 201319 (CN)**
- **HOOGLAND, Gabrie
4612 PX Bergen op Zoom (NL)**

(74) Representative: **Balder IP Law, S.L.
Paseo de la Castellana 93
5ª planta
28046 Madrid (ES)**

(56) References cited:
**DE-A1- 2 845 038**
**US-A- 5 985 974**
**US-A1- 2008 193 702**
**US-A1- 2020 140 717**
**US-A1- 2020 332 121**
**US-B2- 9 243 098**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 3/22, C08L 79/08;**
**C08K 3/22, C08L 81/06;**
**C08K 7/10, C08L 23/0823;**
**C08K 7/10, C08L 45/00;**
**C08K 7/10, C08L 79/08;**
**C08K 7/10, C08L 81/06;**
**G02B 1/04, C08K 3/34, C08L 81/06;**
**G02B 1/041, C08L 23/0823, C08K 3/34;**
**G02B 1/041, C08L 79/08, C08K 3/34**

## Description

### BACKGROUND

Thermoplastic polymers, including polyetherimides and polysulfones, are useful in the manufacture of articles and components for a wide range of applications, from automotive parts to electronic appliances. Because of beneficial properties such as transparency and impact resistance, polyetherimides and polysulfones have also been used in optical applications including as sensor lenses, optical interconnectors, transceivers, light guides, camera lenses, eyeglass and safety glass lenses, illumination lenses such as light fixtures, flashlight and lantern lenses, and motor vehicle headlight lenses and covers. Since many optical articles are used in a high-temperature environment or have to be processed under harsh conditions, it is desirable for the materials to have the ability to withstand elevated temperatures without deformation or discoloration, and the ability to maintain good optical properties even when processed using conventional molding processes. To date, many optical lenses are made from glass as polymer materials were not able to provide the necessary dimensional stability, particularly for use in single mode fiber optic connectors. US 2020/140717 A1 provides materials and processes that can provide for windows or coatings having broadband transmission in both the visible and IR spectrums, while being capable of being formed in complex curved shapes and/or displaying the mechanical durability to meet environmental challenges experienced on many vehicles, or in other applications such as helmet cams or CCTVs. The composition is based on cyclic olefin copolymers and particulate fillers. US 2020/332121 A1 discloses blends of PEI, PPSU and fibrous fillers. These fibers could be wollastonite fibers. The length of these fiber is from 2 to 10 mm and their diameter is from 5 to 40 $\mu$m

Therefore, there is a continuing need in the art for an improved composition that is particularly well suited for optical applications. It would be particularly advantageous to provide a composition having a low coefficient of thermal expansion and high infrared transmission.

### SUMMARY

A composition comprises greater than 50 weight percent to less than 75 weight percent of a polyetherimide, a poly(arylene ether sulfone), or a cyclic olefin copolymer; and greater than 25 weight percent to less than 50 weight percent of a filler; wherein when the polymer comprises the polyetherimide, the filler comprises wollastonite fibers having an average fiber diameter of 5 micrometers to 10 micrometers and an average fiber length of 55 micrometers to 75 micrometers, a surface area of 2.5 $m^2/g$ to less than 2.9 $m^2/g$, a bulk density of 0.42 g/cc to 0.50 g/cc, and a silica content of 52% to 55%; or boehmite having an average particle size (D50), as determined by laser light scattering, of 0.4 micrometer to less than 0.9 micrometer; when the polymer comprises the poly(arylene ether sulfone), the filler comprises wollastonite fibers having an average fiber diameter of 1 micrometers to 5 micrometers and an average fiber length of 5 micrometers to 12 micrometers, a surface area of 3.8 $m^2/g$ to 4.3 $m^2/g$, and a bulk density of 0.48 g/cc to 0.56 g/cc; or boehmite having an average particle size (D50), as determined by laser light scattering, of 0.4 micrometer to less than 0.9 micrometer; and when the polymer comprises the cyclic olefin copolymer, the filler comprises wollastonite fibers having an average fiber diameter of 10 micrometers to 15 micrometers and an average fiber length of 140 micrometers to 165 micrometers, a surface area of 1.0 $m^2/g$ to 1.8 $m^2/g$, and a bulk density of 0.18 g/cc to 0.26 g/cc; wherein weight percent is based on the total weight of the composition.

A method of making the composition comprises: blending the polyetherimide, the poly(arylene ether sulfone), or the cyclic olefin copolymer and the filler.

A method of making the composition, wherein the composition comprises the polyetherimide, comprises: contacting an aromatic bis(ether anhydride) and an organic amine to provide a polyetherimide precursor; combining the filler with the polyetherimide precursor to provide a mixture; and heating the mixture under conditions effective to provide the corresponding polyetherimide.

An article comprises the composition.

The above described and other features are exemplified by the following figures and detailed description.

### BRIEF DESCRIPTION OF THE DRAWINGS

The following figures are exemplary embodiments wherein the like elements are numbered alike.

FIG. 1 is a scanning electron microscopy (SEM) image of the composition according to example 8.
FIG. 2 is a scanning electron microscopy (SEM) image of the composition according to example 61.
FIG. 3 is a scanning electron microscopy (SEM) image of the composition according to example 65.

DETAILED DESCRIPTION

The present inventors have unexpectedly discovered that compositions including a polyetherimide, a poly(arylene ether sulfone) or a cyclic olefin copolymer and particular inorganic fillers can provide a desirable combination of properties. In particular, the compositions described herein can form thin films from a solution-based method exhibiting low coefficients of thermal expansion (CTE), high infrared (IR) transmission, and good processability. The compositions described herein can be particularly well suited for a variety of articles, specifically articles for optical applications.

Accordingly, a composition is an aspect of the present disclosure. The composition comprises a polyetherimide, a poly(arylene ether sulfone) or a cyclic olefin copolymer.

In an aspect, the composition comprises the polyetherimide. Polyetherimides comprise more than 1, for example 2 to 1000, or 5 to 500, or 10 to 100 structural units of formula (1)

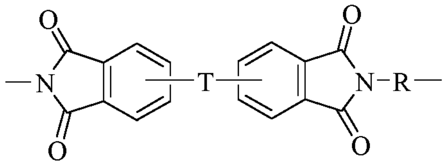

(1)

wherein each R is independently the same or different, and is a substituted or unsubstituted divalent organic group, such as a substituted or unsubstituted $C_{6-20}$ aromatic hydrocarbon group, a substituted or unsubstituted straight or branched chain $C_{4-20}$ alkylene group, a substituted or unsubstituted $C_{3-8}$ cycloalkylene group, in particular a halogenated derivative of any of the foregoing. In an aspect R is divalent group of one or more of the following formulas (2)

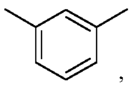 , 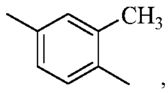 , 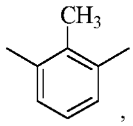 , 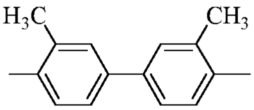 , 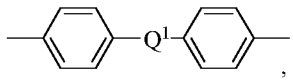 ,

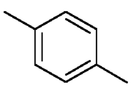 , 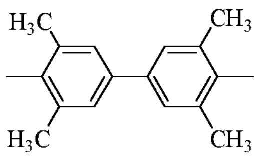 , 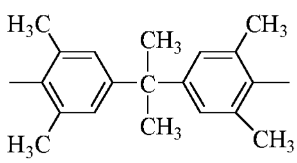 , 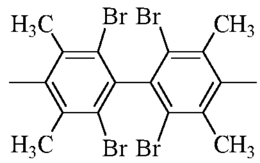 ,

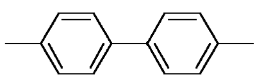 , or 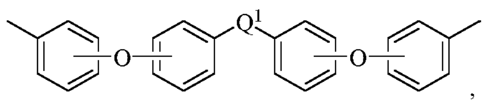 ,

(2)

wherein $Q^1$ is -O-, -S-, -C(O)-, -SOz-, -SO-, -P($R^a$)(=O)- wherein $R^a$ is a $C_{1-8}$ alkyl or $C_{6-12}$ aryl, - $C_yH_{2y}$- wherein y is an integer from 1 to 5 or a halogenated derivative thereof (which includes perfluoroalkylene groups), or -$(C_6H_{10})_z$- wherein z is an integer from 1 to 4. In an aspect R is m-phenylene, p-phenylene, or a diarylene sulfone, in particular bis(4,4'-phenylene)sulfone, bis(3,4'-phenylene)sulfone, bis(3,3'-phenylene)sulfone, or a combination comprising at least one of the foregoing. In an aspect, at least 10 mole percent or at least 50 mole percent of the R groups contain sulfone groups, and in other aspects no R groups contain sulfone groups.

Further in formula (1), T is -O- or a group of the formula -O-Z-O- wherein the divalent bonds of the -O- or the -O-Z-O- group are in the 3,3', 3,4', 4,3', or the 4,4' positions, and Z is an aromatic $C_{6-24}$ monocyclic or polycyclic moiety optionally substituted with 1 to 6 $C_{1-8}$ alkyl groups, 1 to 8 halogen atoms, or a combination comprising at least one of the foregoing, provided that the valence of Z is not exceeded. Exemplary groups Z include groups of formula (3)

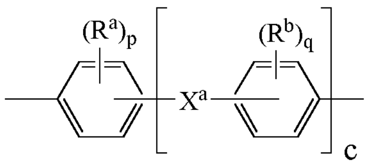
(3)

wherein $R^a$ and $R^b$ are each independently the same or different, and are a halogen atom or a monovalent $C_{1-6}$ alkyl group, for example; p and q are each independently integers of 0 to 4; c is 0 to 4; and $X^a$ is a bridging group connecting the hydroxy-substituted aromatic groups, where the bridging group and the hydroxy substituent of each $C_6$ arylene group are disposed ortho, meta, or para (specifically para) to each other on the $C_6$ arylene group. The bridging group $X^a$ can be a single bond, -O-, -S-, -S(O)-, $-S(O)_2-$, -C(O)-, or a $C_{1-18}$ organic bridging group. The $C_{1-18}$ organic bridging group can be cyclic or acyclic, aromatic or non-aromatic, and can further comprise heteroatoms such as halogens, oxygen, nitrogen, sulfur, silicon, or phosphorous. The Ci-is organic group can be disposed such that the $C_6$ arylene groups connected thereto are each connected to a common alkylidene carbon or to different carbons of the $C_{1-18}$ organic bridging group. A specific example of a group Z is a divalent group of formula (3a)

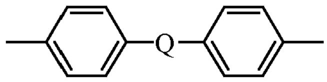
(3a)

wherein Q is -O-, -S-, -C(O)-, $-SO_2-$, -SO-, $-P(R^a)(=O)-$ wherein $R^a$ is a $C_{1-8}$ alkyl or $C_{6-12}$ aryl, or $-C_yH_{2y}-$ wherein y is an integer from 1 to 5 or a halogenated derivative thereof (including a perfluoroalkylene group). In an aspect Z is derived from bisphenol A, such that Q in formula (3a) is 2,2-isopropylidene.

In an aspect in formula (1), R is m-phenylene, p-phenylene, or a combination comprising at least one of the foregoing, and T is -O-Z-O- wherein Z is a divalent group of formula (3a). Alternatively, R is m-phenylene, p-phenylene, or a combination comprising at least one of the foregoing, and T is -O-Z-O- wherein Z is a divalent group of formula (3a) and Q is 2,2-isopropylidene. Such materials are available under the trade name ULTEM from SABIC. Alternatively, the polyetherimide can be a copolymer comprising additional structural polyetherimide units of formula (1) wherein at least 50 mole percent (mol%) of the R groups are bis(4,4'-phenylene)sulfone, bis(3,4'-phenylene)sulfone, bis(3,3'-phenylene)sulfone, or a combination comprising at least one of the foregoing and the remaining R groups are p-phenylene, m-phenylene or a combination comprising at least one of the foregoing; and Z is 2,2-(4-phenylene)isopropylidene, i.e., a bisphenol A moiety, an example of which is commercially available under the trade name EXTEM from SABIC.

In an aspect, the polyetherimide is a copolymer that optionally comprises additional structural imide units that are not polyetherimide units, for example imide units of formula (4)

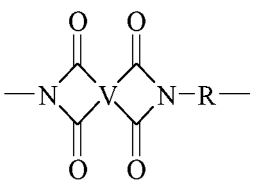
(4)

wherein R is as described in formula (1) and each V is the same or different, and is a substituted or unsubstituted $C_{6-20}$ aromatic hydrocarbon group, for example a tetravalent linker of the formulas

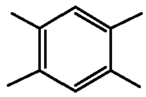
or
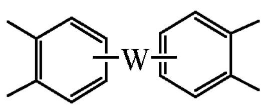

wherein W is a single bond, -O-, -S-, -C(O)-, $-SO_2-$, -SO-, a $C_{1-18}$ hydrocarbylene group, - $P(R^a)(=O)-$ wherein $R^a$ is a $C_{1-8}$ alkyl or $C_{6-12}$ aryl, or $-C_yH_{2y}-$ wherein y is an integer from 1 to 5 or a halogenated derivative thereof (which includes perfluoroalkylene groups). These additional structural imide units preferably comprise less than 20 mol% of the total number of units, and more preferably can be present in amounts of 0 mol% to 10 mol% of the total number of units, or 0 mol% to 5 mol% of the total number of units, or 0 mol% to 2 mol% of the total number of units. In an aspect, no additional

imide units are present in the polyetherimide.

The polyetherimide can be prepared by any of the methods known to those skilled in the art, including the reaction of an aromatic bis(ether anhydride) of formula (5) or a chemical equivalent thereof, with an organic diamine of formula (6)

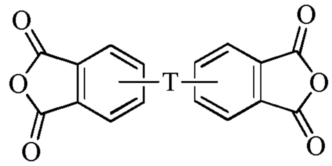
(5)

$H_2N-R-NH_2$ (6)

wherein T and R are defined as described above. Copolymers of the polyetherimides can be manufactured using a combination of an aromatic bis(ether anhydride) of formula (5) and an additional bis(anhydride) that is not a bis(ether anhydride), for example pyromellitic dianhydride or bis(3,4-dicarboxyphenyl) sulfone dianhydride.

Illustrative examples of aromatic bis(ether anhydride)s include 2,2-bis[4-(3,4-dicarboxyphenoxy)phenyl]propane dianhydride (also known as bisphenol A dianhydride or BPADA), 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; 4,4'-(hexafluoroisopropylidene)diphthalic anhydride; and 4-(2,3-dicarboxyphenoxy)-4'-(3,4-dicarboxyphenoxy)diphenyl sulfone dianhydride. A combination of different aromatic bis(ether anhydride)s can be used.

Examples of organic diamines include 1,4-butane diamine, 1,5-pentanediamine, 1,6-hexanediamine, 1,7-heptanediamine, 1,8-octanediamine, 1,9-nonanediamine, 1,10-decanediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone (also known as 4,4'-diaminodiphenyl sulfone (DDS)), and bis(4-aminophenyl) ether. Any regioisomer of the foregoing compounds can be used. $C_{1-4}$ alkylated or poly($C_{1-4}$)alkylated derivatives of any of the foregoing can be used, for example a polymethylated 1,6-hexanediamine. Combinations of these compounds can also be used. In an aspect the organic diamine is m-phenylenediamine, p-phenylenediamine, 4,4'-diaminodiphenyl sulfone, 3,4'-diaminodiphenyl sulfone, 3,3'-diaminodiphenyl sulfone, or a combination comprising at least one of the foregoing. In an aspect, the organic diamine is m-phenylenediamine, p-phenylenediamine, or a combination thereof, preferably m-phenylene.

The polyetherimide can have a melt index of 0.1 grams per minute (g/min) to 10 g/min, as measured by American Society for Testing Materials (ASTM) D1238 at 340 °C to 370 °C, using a 6.7 kilogram (kg) weight. In an aspect, the polyetherimide has a weight average molecular weight (Mw) of 1,000 to 150,000 grams/mole (g/mol or Dalton (Da)), as measured by gel permeation chromatography, using polystyrene standards. In an aspect the polyetherimide has an Mw of 10,000 to 80,000 g/mol. Such polyetherimides typically have an intrinsic viscosity greater than 0.2 deciliters per gram (dl/g), or, more specifically, 0.35 dl/g to 0.7 dl/g as measured in m-cresol at 25 °C.

In an aspect, the composition comprises the poly(arylene ether sulfone). As used herein, the term "poly(arylene ether sulfone)" can refer to polymers having repeat units of formula (7)

$-Ar^1-SO_2-Ar^2-O-$ (7)

wherein each $Ar^1$ and $Ar^2$ is the same or different, and is a group of formula (8)

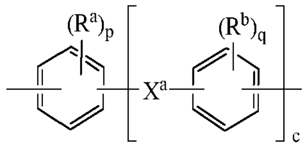

(8)

wherein c is 0 or 1, $R^a$ and $R^b$ are each independently a linear or branched $C_{1-10}$ alkyl, linear or branched $C_{2-10}$ alkenyl, linear or branched $C_{2-10}$ alkynyl, Ce-is aryl, $C_{7-20}$ alkylaryl, $C_{7-20}$ arylalkyl, $C_{5-10}$ cycloalkyl, $C_{5-20}$ cycloalkenyl, linear or branched C1-10 alkylcarbonyl, $C_{6-18}$ arylcarbonyl, halogen, nitro, cyano, a halogen, $C_{1-12}$ alkoxy, or $C_{1-12}$ alkyl, and p and q are each independently integers of 0 to 4. It will be understood that when p or q is less than 4, the valence of each carbon of the ring is filled by hydrogen. Also in formula (8), $X^a$ is a bridging group connecting the two hydroxy-substituted aromatic groups, where the bridging group and the hydroxy substituent of each $C_6$ arylene group are disposed ortho, meta, or para (specifically para) to each other on the $C_6$ arylene group. In an aspect, the bridging group $X^a$ is single bond, - O-, -S-, -S(O)-, $-S(O)_2-$, -C(O)-, or a $C_{1-18}$ organic group. The $C_{1-18}$ organic bridging group can be cyclic or acyclic, aromatic or non-aromatic, and can further comprise heteroatoms such as halogens, oxygen, nitrogen, sulfur, silicon, or phosphorous. The $C_{1-18}$ organic group can be disposed such that the $C_6$ arylene groups connected thereto are each connected to a common alkylidene carbon or to different carbons of the $C_{1-18}$ organic bridging group. In an aspect, c is 0 or 1, p and q is each 0, and $X^a$ is isopropylidene.

Specific poly(arylene ether sulfone)s that can be used include polyethersulfone (also known as "PES" or "PESU"), which contains at least 85 weight percent of units of formula (8a)

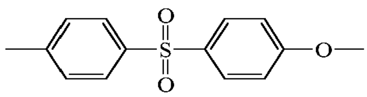

(8a)

or polyphenylene sulfone (also known as "PPSU" or polyphenylsulfone), which contains at least 85 weight percent of units of formula (8b)

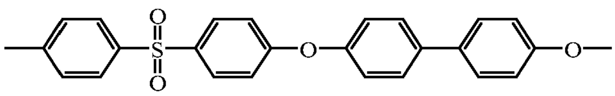

(8b)

or polyetherethersulfone, which contains at least 85 weight percent of units of formula (8c)

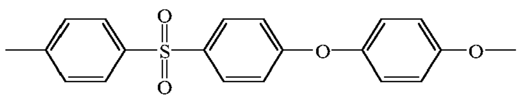

(8c)

or polysulfone (often referred to as "PSU"), which contains at least 85 weight percent of units of formula (8d)

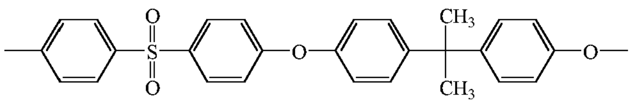

(8d)

or a combination comprising at least one of the foregoing poly(arylene ether sulfone)s. Copolymers comprising a combination of at least two types of units of formulas (8a), (8b), (8c), and (8d) can also be used.

The poly(arylene ether sulfone)s can be linear or branched, having 1 or more, 2 or more, or 5 or more branching points per 1,000 carbon atoms along the polymer chain. In an aspect, the poly(arylene ether sulfone)s are linear, having 10 or fewer, 5 or fewer, 2 or fewer, or 1 or fewer branching points per 1,000 carbon atoms along the polymer chain. In an aspect, the poly(arylene ether sulfone)s have a glass transition temperature (Tg) of greater than 175 °C, specifically of greater than 175 °C to 300°C, or from 200 °C to 280 °C, or from 255 °C to 275 °C. The poly(arylene ether sulfone)s can further have a weight average molecular weight (Mw) of 500 g/mol to 100,000 g/mol, specifically 1,000 g/mol to 75,000 g/mol, more specifically 1,500 g/mol to 50,000 g/mol, and still more specifically 2,000 g/mol to 25,000 g/mol.

Exemplary poly(arylene ether sulfone)s that can be used include those that are available from sources such as Solvay Specialty Polymers, Quadrant EPP, Centroplast Centro, Duneon, GEHR Plastics, Westlake Plastics, Gharda Chemicals, Sumitomo Chemial, and UJU New Materials Co., Ltd.. Commercial grades of poly(phenylsulfone)s include those with the trade names RADEL™, UDEL™, ULTRASON™, GAFONE™, and PARYLS™. Poly(arylene ether sulfone)s are commercially available from Solvay Advanced Polymers K.K. under the trademark of VERADEL™, from BASF Corporation under the trademark of ULTRASON™, and from Sumitomo Chemical Co., Ltd. under the trademark of SUMIKAEXCEL™.

Polyphenylene sulfones are commercially available, including the polycondensation product of biphenol with dichloro diphenyl sulfone. Methods for the preparation of polyphenylene sulfones are widely known and several suitable processes have been well described in the art. Two methods, the carbonate method and the alkali metal hydroxide method, are known to the skilled artisan. In the alkali metal hydroxide method, a double alkali metal salt of a dihydric phenol is contacted with a dihalobenzenoid compound in the presence of a dipolar, aprotic solvent under substantially anhydrous conditions. The carbonate method, in which a dihydric phenol and a dihalobenzenoid compound are heated, for example, with sodium carbonate or bicarbonate and a second alkali metal carbonate or bicarbonate is also disclosed in the art, for example in U.S. Pat. No. 4,176,222. Alternatively, the polyphenylene sulfone can be prepared by any of the variety of methods known in the art.

The molecular weight of the polyphenylene sulfone, as indicated by reduced viscosity data in an appropriate solvent such as methylene chloride, chloroform, N-methylpyrrolidone, or the like, can be greater than or equal to 0.3 dl/g, or, more specifically, greater than or equal to 0.4 dl/g and, typically, will not exceed 1.5 dl/g.

The polyphenylene sulfone weight average molecular weight (Mw) can be 10,000 g/mol to 100,000 g/mol as determined by gel permeation chromatography using ASTM D5296 with polystyrene standards. In an aspect the polyphenylene sulfone weight average molecular weight can be 10,000 g/mol to 80,000 g/mol. Polyphenylene sulfones can have glass transition temperatures (Tg) of 180 °C to 250 °C, as determined using differential scanning calorimetry (DSC).

In an aspect, the composition comprises the cyclic olefin copolymer. Cyclic olefin copolymers are derived from copolymerization of a cyclic olefin. Examples of suitable cyclic olefin monomers are norbornene, tetracyclododecene, bicyclo[2,2,1]hept-2-ene, 1-methylbicyclo[2,2,1]hept-2-ene, hexacyclo[6,6,1,$1^3$,6,$1^{10}$,13,$0^2$,7,$0^9$,14]-4-heptadecene, and the like, and combinations thereof. Many such monomers are well known and are described, for example, in U.S. Pat. No. 5,008,356. In the case of cyclic olefin copolymers (COCs), the comonomer or comonomers are chosen from a variety of suitable olefins, including, for example, acyclic olefins. Many such comonomers are also well known in the literature, including, for example, the above-noted U.S. Pat. No. 5,008,356. In an aspect, the cyclic olefin monomer comprises norbornene, and the comonomer comprises acyclic olefins, for example, ethylene, propylene and the like.

In an aspect, the polyetherimide, poly(arylene ether sulfone) or cyclic olefin copoylmer can have a transmission of greater than 70% from 850 nm to 1100 nm and from 1200 nm to 1330 nm, determined using UV/Vis spectroscopy of a film, for example having a thickness of 100 micrometers.

The polyetherimide, poly(arylene ether sulfone) or cyclic olefin copolymer can be present in the composition in an amount of greater than 50 weight percent to less than 75 weight percent, based on the total weight of the composition. Within this range, the polyetherimide, poly(arylene ether sulfone) or cyclic olefin copolymer can be present in an amount of 53 to 72 weight percent, or 53 to 70 weight percent, or 53 to 68 weight percent, or 55 to 65 weight percent, or 58 to 62 weight percent.

In addition to the polyetherimide, poly(arylene ether sulfone) or cyclic olefin copoylmer, the composition further comprises a filler. The filler can preferably have a refractive index of 1.60 to 1.68, or 1.60 to 1.67, or 1.60 to 1.66 as determined at a wavelength of 587 nanometers. The filler comprises boehmite or wollastonite, and each can optionally be surface modified. In an aspect, the filler does not include any surface modifications. As is further described in the working examples below, selection of the filler can depend on the polymer present in the composition (e.g., the polyetherimide, poly(arylene ether sulfone), or cyclic olefin copolymer). Depending on the polymer present in the composition, the filler can further be selected based on one or more of average particle size, surface area, bulk density, or composition. Average particle sizes can be determined by various methods that are generally known including laser light scattering techniques or microscopy, such as scanning electron microscopy. Surface area can refer to the Brunauer-Emmett-Teller (BET) specific surface area, determined according to ISO 9277. Bulk density can refer to the loose bulk density of the filler and can be determined by methods which are generally known, for example according to ASTM D7481-18.

In an aspect, the filler can comprise wollastonite fibers. In an aspect, the wollastonite fibers can have an average fiber diameter of 5 micrometers to 10 micrometers and an average fiber length of 55 micrometers to 75 micrometers. In an aspect, the wollastonite fibers can have an average fiber diameter of 1 to 5 micrometers and an average fiber length of 5 micrometers to 12 micrometers. In an aspect, the wollastonite fibers can have an average fiber diameter of 10 micrometers to 15 micrometers and an average fiber length of 140 micrometers to 165 micrometers.

In an aspect, the composition comprises the polyetherimide and the filler comprises wollastonite fibers having an average fiber diameter of 5 micrometers to 10 micrometers and an average fiber length of 55 micrometers to 75 micrometers, a surface area of 2.5 $m^2/g$ to less than 2.9 $m^2/g$, a bulk density of 0.42 g/cc to 0.50 g/cc, and a silica content

of 52% to 55%.

In an aspect, the composition comprises the poly(arylene ether sulfone) and the filler comprises wollastonite fibers having an average fiber diameter of 1 micrometer to 5 micrometers and an average fiber length of 5 micrometers to 12 micrometers, a surface area of 3.8 $m^2/g$ to 4.3 $m^2/g$, and a bulk density of 0.48 g/cc to 0.56 g/cc.

In an aspect, the composition comprises the cyclic olefin copolymer and the filler comprises wollastonite fibers having an average fiber diameter of 10 micrometers to 15 micrometers and an average fiber length of 140 micrometers to 165 micrometers, a surface area of 1.0 $m^2/g$ to 1.8 $m^2/g$, and a bulk density of 0.18 g/cc to 0.26 g/cc.

In an aspect, the filler can comprise boehmite (also referred to as aluminum oxide hydroxide). The boehmite preferably has a refractive index of 1.60 to 1.68, or 1.60 to 1.67, or 1.60 to 1.66 as determined at a wavelength of 587 nanometers. The inorganic filler can have an average particle size of 0.4 micrometer to less than 0.9 micrometer, as determined by laser light scattering.

In an aspect, the composition comprises the polyetherimide and the filler comprises boehmite having an average particle size (D50), as determined by laser light scattering, of 0.4 micrometer to less than 0.9 micrometer.

In an aspect, the composition comprises the poly(arylene ether sulfone) and the filler comprises boehmite having an average particle size (D50), as determined by laser light scattering, of 0.4 micrometer to less than 0.9 micrometer.

In an aspect, the composition comprises the cyclic olefin copolymer, and the filler does not include boehmite.

The filler can be included in the composition in an amount of greater than 25 weight percent to less than 50 weight percent, based on the total weight of the composition. Within this range, the filler can be present in an amount of 28 weight percent to 48 weight percent, or 30 weight percent to 48 weight percent, or 32 weight percent to 47 weight percent, or 35 weight percent to 45 weight percent, or 38 weight percent to 42 weight percent.

In an aspect, the composition comprises, consists essentially of, or consists of the polyetherimide, the poly(arylene ether sulfone) or the cyclic olefin copolymer, and the filler. In an aspect, the composition can exclude any component other than the polyetherimide, the poly(arylene ether sulfone) or the cyclic olefin polymer, and the filler that is not specifically described herein. In an aspect, the composition comprises less than 5 weight percent, or less than 1 weight percent (based on the total weight of the composition) of any thermoplastic polymer other than the polyetherimide, the poly(arylene ether sulfone), and the cyclic olefin copolymer. The composition can optionally exclude any inorganic filler other than the boehmite or wollastonite.

In an aspect, the composition can optionally further comprise an additive composition, comprising one or more additives selected to achieve a desired property, with the proviso that the additive(s) are also selected so as to not significantly adversely affect a desired property of the composition. The additive composition or individual additives can be mixed at a suitable time during the mixing of the components for forming the composition. The additive composition can include an impact modifier, flow modifier, filler (e.g., a particulate polytetrafluoroethylene (PTFE), glass, carbon, mineral, or metal), reinforcing agent (e.g., glass fibers), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g., a dye or pigment), surface effect additive, radiation stabilizer, flame retardant, anti-drip agent (e.g., a PTFE-encapsulated styreneacrylonitrile copolymer (TSAN)), or a combination thereof. For example, a combination of a heat stabilizer, mold release agent, and ultraviolet light stabilizer can be used. In general, the additives are used in the amounts generally known to be effective. For example, the total amount of the additive composition (other than any impact modifier, filler, or reinforcing agent) can be 0.001 wt% to 10.0 wt%, or 0.01 wt% to 5 wt%, each based on the total weight of the composition.

In an aspect, the composition can further comprise an additive composition comprising an antioxidant, a thermal stabilizer, a hydrostabilizer, a UV stabilizer, a mold release agent, or a combination comprising at least one of the foregoing.

The composition can be manufactured by various methods generally known in the art. For example, the polyetherimide, poly(arylene ether sulfone) or cyclic olefin copolymer can be blended with the filler, for example in a high-speed mixer or by handmixing. In an aspect, blending the components of the composition can preferably be in the presence of a solvent. Any organic solvent that is capable of solubilizing the components of the composition can be used, for example, ortho-dichlorobenzene, dichloromethane, n-methyl pyrrolidinone, dimethyl or acetamide. The combined components in the solvent can be mixed to disperse the filler for a suitable time (e.g., 1 hour to 10 hours). The methods for manufacturing the composition are further exemplified in the working examples below.

Blending of the components of the composition can be at a temperature of 20 °C to 200 °C, preferably 20 °C to 25 °C or 175 °C to 200 °C.

In an aspect, the composition can be prepared by contacting an aromatic bis(ether anhydride) and an organic amine to provide a polyetherimide precursor and combining the filler with the polyetherimide precursor to provide a mixture. The mixture can be heated under conditions effective to provide the corresponding polyetherimide (i.e., to facilitate imidization of the precursor).

The composition can be further be formed in a film, for example using various coating techniques that are

generally known, including solution coating, spin coating, doctor blading, drop casting, and the like. Solvent can be removed from the films. The thickness of the film can be, for example, 50 micrometers to 500 micrometers, or 50 micrometers to 250 micrometers, or 50 micrometers to 150 micrometers, or 75 micrometers to 125 micrometers.

Films formed from the composition can exhibit one or more advantageous properties. For example, a film formed from the composition can exhibit a flow coefficient of thermal expansion of less than or equal to 36 ppm/°C, or 5 ppm/°C to 36 ppm/°C, as determined according to ASTM E831. A film formed from the composition can exhibit a percent transmission of greater than 50%, or greater than 50% to 95%, at 1330 nm at a thickness of 100 micrometers. Transmission of the film can be determined by UV/Vis spectroscopy using a Perkin Elmer Lambda 950 spectrometer with an integrating sphere measuring transmittance at a set wavelength of 1330 nanometers. In an aspect, a film formed from the composition can exhibit both of the foregoing properties.

In an aspect, the composition comprises the polyetherimide and the filler comprises the wollastonite, and a film formed from the composition exhibits a flow coefficient of thermal expansion of less than or equal to 25 ppm/°C, or 5 ppm/°C to 25 ppm/°C, as determined according to ASTM D256; and a percent transmission of greater than 50%, or greater than 50% to 95% at 1330 nanometers, as determined by UV/Vis spectroscopy at a thickness of 100 micrometers.

In an aspect, the composition comprises the polyetherimide and the filler comprises the boehmite, and a film formed from the composition exhibits a flow coefficient of thermal expansion of less than or equal to 35 ppm/°C, or 5 ppm/°C to 35 ppm/°C, as determined according to ASTM D256; and a percent transmission of greater than 75%, or greater than 75% to 95% at 1330 nanometers, as determined by UV/Vis spectroscopy at a thickness of 100 micrometers.

In an aspect, the composition comprises the poly(arylene ether sulfone) and the filler comprises the wollastonite and a film formed from the composition exhibits a flow coefficient of thermal expansion of less than or equal to 36 ppm/°C, or 5 ppm/°C to 36 ppm/°C, as determined according to ASTM E831; and a percent transmission of greater than 50 %, or greater than 50 % to 95 %, at 1330 nm as determined by UV/Vis spectroscopy at a thickness of 100 micrometers.

In an aspect, the composition comprises the poly(arylene ether sulfone) and the filler comprises the boehmite and a film formed from the composition exhibits a flow coefficient of thermal expansion of less than or equal to 35 ppm/°C, or 5 ppm/°C to 35 ppm/°C, as determined according to ASTM E831; and a percent transmission of greater than 50 %, or greater than 50 % to 95 %, at 1330 nm as determined by UV/Vis spectroscopy at a thickness of 100 micrometers.

In an aspect, the composition comprises the cyclic olefin copolymer and the filler comprises the wollastonite and a film formed from the composition exhibits a flow coefficient of thermal expansion of less than or equal to 35 ppm/°C, or 5 ppm/°C to 35 ppm/°C, as determined according to ASTM E831; and a percent transmission of greater than 50%, or greater than 50% to 95%, at 1330 nm as determined by UV/Vis spectroscopy at a thickness of 100 micrometers.

Articles comprising the composition represent another aspect of the present disclosure. Articles can be prepared, for example, by molding, extruding, or shaping the above-described composition into an article. The composition can be molded into useful shaped articles by a variety of methods, such as injection molding, extrusion, rotational molding, blow molding and thermoforming. Exemplary articles can be in the form of a fiber, a film, a sheet, a pipe, or a molded part. The physical properties of the composition described herein can provide articles that are particularly well-suited for transparent articles, for example for use in optical applications. Such articles can include optical articles, preferably an optic lens, a lens array, transparent materials applications in medical devices, electronic and telecommunications, building and constructions, sensors, antennas, electrodes, thin film optics, thin film substrates, transistors and IR transparent display devices. In an aspect, the article can be a lens for a single mode optical fiber connector.

This disclosure is further illustrated by the following examples, which are nonlimiting.

EXAMPLES

Materials used in the following examples are described in Table 1.

Table 1

| Component | Description | Supplier |
|---|---|---|
| PEI | Polyetherimide comprising repeating units derived from 2,2-bis[4-(3,4-dicarboxyphenoxy)phenyl] propane dianhydride with metaphenylene diamine, having a weight average molecular weight of 45,000 grams per mole, as determined by gel permeation chromatography relative to polystyrene standards | SABIC |
| PPSU | Polyphenylene sulfone, obtained as RADEL R 5100 NT | Solvay |
| PES | Polyether sulfone, obtained as ULTRASON E | BASF Corp |
| PSU | Polysulfone, obtained as UDEL P-1700 | Solvay |

(continued)

| Component | Description | Supplier |
|---|---|---|
| COC | Cyclic olefin copolymer comprising ethylene-norbomene copolymer, CAS. Reg. No. 26007-43-2, obtained as TOPAS 6017 | TOPAS |
| Kaolin 1 | Kaolin, obtained as Acti-Min RC15 | Active Minerals |
| Kaolin 2 | Kaolin having a mean particle size of 0.4 micrometers, as determined using laser light scattering, obtain as KaMin POLYFIL HG90 | Active Minerals |
| Calcium carbonate | Calcium carbonate obtained as Omva 753 | Omva |
| Wollastonite 1 | Wollastonite having a relative particle size of 7x63 $\mu$m, a surface area of 2.9 $m^2/g$, a bulk density of 0.41 g/cc, and a silica content of 51.6%, as determined by X-ray fluorescence (XRF), obtained as Nyglos 4W | Imerys |
| Wollastonite 2 | Wollastonite having a relative particle size of 12x156 $\mu$m, a bulk density of 0.22 $g/cm^3$, a BET surface area of 1.4 $m^2/g$ obtained as Nyglos 8 | Imerys |
| Wollastonite 3 | Wollastonite having a relative particle size of 3x9 $\mu$m, a BET surface area of 4.1 $m^2/g$, and a bulk density of 0.52 $g/cm^3$, obtained as M9000 | Imerys |
| Wollastonite 4 | Wollastonite with relative particle size 7x63 $\mu$m, a surface area of 2.7 $m^2/g$, a bulk density of 0.45 g/cc, and a silica content of 52.9%, as determined by X-ray fluorescence (XRF) obtained as Nyglos M4W | Imerys |
| AlO(OH)-1 | Aluminium oxide hydroxide having an average particle size (D50) of 0.1-0.2 $\mu$m, obtained as BG-200-Nano | Anhui Estone |
| AlO(OH)-2 | Aluminium oxide hydroxide having an average particle size (D50) of 0.35 $\mu$m, obtained as ACTILOX® 200 AS1 (Boehmite) | Nabaltec |
| AlO(OH)-3 | Aluminium oxide hydroxide having an average particle size (D50) of 0.30 $\mu$m, obtained as ACTILOX® 200SM (surface modified Boehmite) | Nabaltec |
| AlO(OH)-4 | Aluminium oxide hydroxide having an average particle size (D50) of 0.5 $\mu$m, obtained as BG-611 | Anhui Estone |
| AlO(OH)-5 | Aluminium oxide hydroxide having an average particle size (D50) of 0.9 $\mu$m, obtained as BG-611 | Anhui Estone |
| DCM | Dichloromethane | Aldrich |
| oDCB | Ortho-dichlorobenzene | Aldrich |
| NMP | N-Methylpyrrolidone | Aldrich |
| DMAc | Dimethylacetamide | Aldrich |

Compositions were prepared by solution blending polymer and filler, according to the compositions described in Table 2. The amount of each component is provided in weight percent, based on the total weight of the composition. Specifically, the compositions were prepared using one of three methods: 1) dissolving polymer in solvent (PEI withDCM) at room temperature and then adding the filler. The resulting solution was stirred with a mechanical stirrer/shaker to disperse the filler in the resin for 5-7 hours; 2) dissolving polymer in solvent (PEI withoDCB; PPSU with NMP; PES with DMAc; and COC in oDCB) at high temperature and then adding the filler. In this method, into a four necked round bottom flask equipped with a mechanical stirrer, nitrogen inlet, thermowell and Dean-Stark apparatus with reflux condenser, PEI was added with 300 mL dry oDCB. The flask was purged with nitrogen, then heated to 210 °C (oil bath temperature) to remove trace of moisture by the Dean-Stark apparatus. Temperature inside the flask was 180 °C. After 90 minutes, PEI was completely dissolved in the oDCB to form a clear solution. Filler was added followed by 50 mL of additional of oDCB. The resulting mixture was allowed to stir at 180 °C for 7-9 hours to complete the dispersion; and 3) into a four necked round bottom flask equipped with a mechanical stirrer, nitrogen inlet, thermowell and Dean-Stark apparatus with reflux condenser, 41 grams of bisphenol-A-dianhydride (BPADA) was added with dry oDCB. The flask was purged with

nitrogen, then heated to 210 °C (oil bath temperature) to remove trace of moisture by the Dean-Stark apparatus. Temperature inside the flask was 180 °C. After 90 minutes, BPADA was completely dissolved in oDCB to form a clear solution. The reaction mixture was allowed to cool to 90 °C and 8.6 grams of m-phenylene diamine was added to the mixture. The flask was heated to 210 °C (oil bath temperature) while the inside temperature was maintained at 180 °C. The reaction mixture was stirred for 90 minutes which resulted in a transparent yellow viscous solution of polyamicacid (PAA). Filler was added followed by 50 mL of additional of oDCB. The fillers were mixed with the polyamic acid to form the filler - PAA mixture. The resulting mixture was stirred at 180 °C for 7-9 hours to complete the polymerization and form the corresponding polyetherimide.

Independent of the process method used, the polymer solution was spread on a glass plate in a longitudinal flow direction using a film applicator blade to control the film thickness. The films were then kept inside the fume hood for 24 hours and peeled off from the glass plate. The films were cut and thermally dried at 120-180 °C under vacuum for 24 hours to remove solvent. The films were cooled to room temperature and tested for thermal and optical properties. The film thickness was 100 micrometers.

Properties were measured using ASTM test methods. All film samples were conditioned for at least 48 hours at 50% relative humidity prior to testing.

The thermal expansion (CTE) measurement was carried out according to ASTM E831 and in the range of 40 ± 100 °C using a DuPont 2940 probe, which provided 0.05 N tension force on the film, at a heating rate of 58 °C per minute. The CTE values on the temperature scale between 30 °C and 80 °C were recorded.

Thermogravimetric analysis (TGA) measurement was carried out in the range of 25 °C to 1000 °C by Q 5000-TA Instruments with the ramp rate 10 °C/min in films to measure the filler content, according to ASTM E 1131.

Percent Transmittance measurement was measured in the range of IR region by UV-Vis spectrophotometer Perkin Elmer Lambda 900 spectrometer with integrating spheres and a slit width of 2 nanometers

Haze was measured in the visible region (i.e., 400 nm to 750 nm) with a haze meter (Haze-gard from BYK-Gardner) as per ASTM D1003 standard. Percent haze is calculated from the ratio of diffuse transmittance $T_d$, to total luminous transmittance $T_t$ as follows:

$$\text{Haze, \%} = T_d / T_t * 100).$$

The compositions of Table 2 were prepared using process 1 as described above.

Table 2a

| Component | E1* | E2* | E3* | E4* | E5 | E6* | E7* | E8 | E9* | E10* | E11* | E12* | E13* |
|---|---|---|---|---|---|---|---|---|---|---|---|---|---|
| PEI | 60 | 60 | 60 | 60 | 60 | 60 | 60 | 60 | 60 | 60 | 60 | 60 | 60 |
| PPSU | | | | | | | | | | | | | |
| PES | | | | | | | | | | | | | |
| PSU | | | | | | | | | | | | | |
| COC | | | | | | | | | | | | | |
| Kaolin 1 | | 40 | | | | | | | | | | | |
| Kaolin 2 | | | 40 | | | | | | | | | | |
| Calcium carbonate | | | | 40 | | | | | | | | | |
| Wollastonite 1 | 40 | | | | | 40 | | | | | | | |
| Wollastonite 2 | | | | | | | 40 | | | | | | |
| Wollastonite 3 | | | | | | | | | 40 | | | | |
| Wollastonite 4 | | | | | | | | 40 | | | | | |
| A1O(OH)-1 | | | | | | | | | | 40 | | | |
| AlO(OH)-2 | | | | | | | | | | | | 40 | |
| AlO(OH)-3 | | | | | | | | | | | 40 | | |
| AlO(OH)-4 | | | | | 40 | | | | | | | | |
| AlO(OH)-5 | | | | | | | | | | | | | 40 |

(continued)

| Component | E1* | E2* | E3* | E4* | E5 | E6* | E7* | E8 | E9* | E10* | E11* | E12* | E13* |
|---|---|---|---|---|---|---|---|---|---|---|---|---|---|
| Properties | | | | | | | | | | | | | |
| CTE (ppm/°C) | 22 | 41 | 52 | 44 | 35 | 22 | 21 | 21 | 45.6 | 41 | 46 | 48.2 | 40 |
| %Transmittance (a) 1330 nm | 43 | 8 | 14 | 20 | 74 | 43 | 4 | 54 | 48 | 77 | 75 | 72 | 60 |
| % Filler by TGA | 38 | 39 | 40 | 39 | 38 | 38 | 40 | 39 | 39 | 39 | 40 | 39 | 40 |
| *indicates a comparative example | | | | | | | | | | | | | |

Table 2b

| Component | E14* | E15* | E16* | E17* | E18* | E19* | E20* | E21* | E22* | E23* | E24* | E25* |
|---|---|---|---|---|---|---|---|---|---|---|---|---|
| PEI | 90 | 80 | 70 | 50 | 90 | 80 | 70 | 50 | 90 | 80 | 70 | 50 |
| PPSU | | | | | | | | | | | | |
| PES | | | | | | | | | | | | |
| PSU | | | | | | | | | | | | |
| COC | | | | | | | | | | | | |
| Kaolin 1 | | | | | | | | | | | | |
| Kaolin 2 | | | | | | | | | | | | |
| Calcium carbonate | | | | | | | | | | | | |
| Wollastonite 1 | | | | | | | | | | | | |
| Wollastonite 2 | | | | | | | | | 10 | 20 | 30 | 50 |
| Wollastonite 3 | 10 | 20 | 30 | 50 | | | | | | | | |
| Wollastonite 4 | | | | | | | | | | | | |
| A1O(OH)-1 | | | | | 10 | 20 | 30 | 50 | | | | |
| AlO(OH)-2 | | | | | | | | | | | | |
| AlO(OH)-3 | | | | | | | | | | | | |
| AlO(OH)-4 | | | | | | | | | | | | |
| AlO(OH)-5 | | | | | | | | | | | | |
| Properties | | | | | | | | | | | | |
| CTE (ppm/°C) | 65 | 49 | 48 | 30 | 49 | 48 | 48 | 35 | 58 | 35 | 25 | 13 |
| %Transmittance @ 1330 nm | 72 | 64 | 49 | 27 | 87 | 85 | 81 | 60 | 28 | 14 | 8 | 1 |
| % Filler by TGA | 9 | 19 | 29 | 50 | 10 | 19 | 30 | 50 | 10 | 19 | 29 | 49 |
| indicates a comparative example | | | | | | | | | | | | |

Table 2c

| Component | E26* | E27* | E28* | E29* | E30* | E31* | E32* | E33* | E34* | E35* | E36* | E37* |
|---|---|---|---|---|---|---|---|---|---|---|---|---|
| PEI | 90 | 80 | 70 | 50 | 90 | 80 | 70 | 50 | 90 | 80 | 70 | 50 |
| PPSU | | | | | | | | | | | | |
| PES | | | | | | | | | | | | |
| PSU | | | | | | | | | | | | |

(continued)

| Component | E26* | E27* | E28* | E29* | E30* | E31* | E32* | E33* | E34* | E35* | E36* | E37* |
|---|---|---|---|---|---|---|---|---|---|---|---|---|
| COC | | | | | | | | | | | | |
| Kaolin 1 | | | | | | | | | | | | |
| Kaolin 2 | | | | | | | | | | | | |
| Calcium carbonate | | | | | | | | | | | | |
| Wollastonite 1 | | | | | | | | | | | | |
| Wollastonite 2 | | | | | | | | | | | | |
| Wollastonite 3 | | | | | | | | | | | | |
| Wollastonite 4 | 10 | 20 | 30 | 50 | | | | | | | | |
| AlO(OH)-1 | | | | | | | | | | | | |
| AlO(OH)-2 | | | | | 10 | 20 | 30 | 50 | | | | |
| AlO(OH)-3 | | | | | | | | | 10 | 20 | 30 | 50 |
| AlO(OH)-4 | | | | | | | | | | | | |
| AlO(OH)-5 | | | | | | | | | | | | |
| Properties | | | | | | | | | | | | |
| CTE (ppm/°C) | 58 | 49 | 28 | 11 | 57 | 50 | 47 | 41 | 61 | 56 | 46 | 30 |
| %Transmittance (a) 1330 nm | 65 | 60 | 57 | 24 | 76 | 77 | 78 | 64 | 68 | 60 | 58 | 40 |
| % Filler by TGA | 9 | 19 | 30 | 49 | 10 | 19 | 30 | 49 | 9 | 19 | 30 | 50 |
| indicates a comparative example | | | | | | | | | | | | |

Table 2d

| Component | E38* | E39* | E40* | E41* |
|---|---|---|---|---|
| PEI | 90 | 80 | 70 | 50 |
| PPSU | | | | |
| PES | | | | |
| PSU | | | | |
| COC | | | | |
| Kaolin 1 | | | | |
| Kaolin 2 | | | | |
| Calcium carbonate | | | | |
| Wollastonite 1 | | | | |
| Wollastonite 2 | | | | |
| Wollastonite 3 | | | | |
| Wollastonite 4 | | | | |
| AlO(OH)-1 | | | | |
| AlO(OH)-2 | | | | |
| AlO(OH)-3 | | | | |
| AlO(OH)-4 | 10 | 20 | 30 | 50 |

(continued)

| Component | E38* | E39* | E40* | E41* |
|---|---|---|---|---|
| AlO(OH)-5 | | | | |
| Properties | | | | |
| CTE (ppm/°C) | 52 | 48 | 42 | 40 |
| %Transmittance @ 1330 nm | 86 | 84 | 80 | 70 |
| % Filler by TGA | 10 | 20 | 29 | 50 |

The compositions of Table 3 were prepared using process 2 as described above.

Table 3a

| Component | E42 * | E43 * | E44 | E45 | E46 * | E47 * | E48 * | E49 * | E50 * | E51 * | E52 * | E53 |
|---|---|---|---|---|---|---|---|---|---|---|---|---|
| PEI | | | | | | | | | | | | |
| PPSU | 70 | 60 | 70 | 60 | 60 | | | | | | | |
| PES | | | | | | 60 | 60 | 60 | 60 | | | |
| PSU | | | | | | | | | | 60 | 60 | 60 |
| COC | | | | | | | | | | | | |
| Kaolin 1 | | | | | | | | | | | | |
| Kaolin 2 | | | | | | | | | | | | |
| Calcium carbonate | | | | | | | | | | | | |
| Wollastonite 1 | | | | | | | | 40 | | | | |
| Wollastonite 2 | | | | | | | | | | | | |
| Wollastonite 3 | | | | | | | | | 40 | | | 40 |
| Wollastonite 4 | 30 | 40 | | | | | 40 | | | 40 | | |
| A1O(OH)-1 | | | | | 40 | | | | | | 40 | |
| AlO(OH)-2 | | | | | | | | | | | | |
| AlO(OH)-3 | | | | | | | | | | | | |
| AlO(OH)-4 | | | 30 | 40 | | | | | | | | |
| AlO(OH)-5 | | | | | | 40 | | | | | | |
| Properties | | | | | | | | | | | | |
| CTE (ppm/°C) | 30 | 22 | 34 | 30 | 35 | 50 | 25 | 32 | 33 | 17 | 23 | 36 |
| % Transmittance @ 1330 nm | 52 | 44 | 84 | 79 | 74 | 4 | 4 | 4 | 5 | 15 | 20 | 70 |
| % Transmittance in visible region | 86 | 78 | 89 | 88 | 88 | | | | | 66 | 70 | 86 |
| % Haze in visible region | 78 | 78 | 32 | 29 | 40 | 100 | 100 | 100 | 100 | 100 | 90 | 74 |
| % Filler by TGA | | | | | | | | | | | | |

Table 3b

| Component | E54* | E55* | E56* | E57 | E58* | E59* | E60* |
|---|---|---|---|---|---|---|---|
| PEI | | | | | | | |
| PPSU | | | | | | | |
| PES | | | | | | | |
| PSU | 60 | 60 | | | | | |
| COC | | | 60 | 60 | 60 | 60 | 60 |
| Kaolin 1 | 40 | | | | | | 40 |
| Kaolin 2 | | | | | | | |
| Calcium carbonate | | | | | | | |
| Wollastonite 1 | | | | | | 40 | |
| Wollastonite 2 | | | | | | | |
| Wollastonite 3 | | | | | | | |
| Wollastonite 4 | | | 40 | | | | |
| A1O(OH)-1 | | | | | 40 | | |
| AlO(OH)-2 | | | | | | | |
| AlO(OH)-3 | | | | | | | |
| AlO(OH)-4 | | 40 | | 40 | | | |
| AlO(OH)-5 | | | | | | | |
| Properties | | | | | | | |
| CTE (ppm/°C) | 48 | 28 | 21 | 24 | 34 | 20 | 45 |
| %Transmittance @ 1330 nm | 15 | 33 | 45 | 61 | 43 | 30 | 35 |
| % Transmittance in visible region | 72 | 65 | 84 | 88 | 71 | 77 | 52 |
| % Haze in visible region (400-750 nm) | 84 | 79 | 70 | 68 | 80 | 85 | 60 |
| % Filler by TGA | | | | | | | |
| indicates a comparative example | | | | | | | |

Examples 1-5 demonstrate the effect of different types of fillers in PEI compositions. Compositions of each of these examples were prepared according to method (1) described above. Example 1 shows that by using wollastonite 1 in a particular amount provides a composition capable of achieving a combination of percent transmittance at 1330 nm of greater than or equal to 50, and a CTE of less than 25 ppm/°C. Example 5 shows that using a boehmite filler in a particular amount provides a composition capable of achieving a composition of percent transmittance at 1330 nm of greater than or equal to 75 and a CTE of less than 35 ppm/°C.

Examples 6-9 demonstrate that the particle size of the filler can affect the resulting PEI composition. Compositions of each of these examples were prepared according to method (1) described above. In particular, these examples demonstrate that by using certain wollastonite filler in a particular amount yields a composition capable of achieving a combination of percent transmittance at 1330 nm greater than or equal to 50 and CTE lesser than 25 ppm/°C. It was expected that lower particle size of wollastonite fillers would enhance the CTE and %T performance due to the dilution effect and same mineral composition. However, only the composition including wollastonite 4 showed the improvement in the %T at 1330nm performance in comparison with the other wollastonite fillers.

Similarly, examples 10-13 demonstrate that by using certain boehmite filler in a particular amount yields a composition capable of achieving a combination of percent transmittance at 1330 nm greater than or equal to 75 and CTE lesser than 35 ppm/°C. It was expected that lower particle size of boehmite fillers would enhance the CTE and %T performance due to the dilution effect and same mineral composition. However, only the composition including AlO(OH)-4 showed the improvement in the %T at 1330 nm performance in comparison with the other boehmite fillers.

Examples 14-17 and 22-29 show that a particular amount and a particular size distribution of wollastonite is required in order to achieve the desired combination of percent transmittance of greater than or equal to 50% at 1330 nm and a CTE of less than 25 ppm/°C.

Examples 18-21 and 30-41 show that a particular amount of boehmite is required in order to achieve the desired combination of percent transmittance of greater than or equal to 75% at 1330 nm and a CTE of less than 35 ppm/°C.

The results shown in Table 2 were unexpected since each filler has a refractive index close to that of the PEI, however, as indicated by the CTE and %T shown in Table 2, each filler did not provide the same effect on the properties of the resulting composition. Additionally, fillers such as kaolin and calcium carbonate also did not show the desired CTE and %T compared to wollastonite or boehmite. The examples shown in Table 2 clearly show that the desired CTE and %T were obtained only when a particular combination of PEI and wollastonite or boehmite was used, and further when the filler possessed a particular particle size. When either lower or higher particle sizes were used, the same improvement in CTE and %T was not observed.

The data shown in Tables 2 and 3 illustrate that there are several factors affecting the selection of a combination of a polymer and a filler. More specifically, different types of fillers can provide different results depending on the selection of a polyetherimide, a poly(arylene ether sulfone), or a cyclic olefin copolymer. Without wishing to be bound by theory, each of these polymers possess different chemical compositions and structures, which can lead to different zeta potentials, hydrophilic/hydrophobic balance, and end group interactions, each of which can have an effect of the stability of the resulting composition. Thus, without wishing to be bound by theory, it is believed that polymer/filler interaction energy, polymer swelling behavior, chain entanglement density, surface energy, degree of solvation of the polymer, and polymer viscosity in the presence of the filler can each have an effect on the properties (in particular, optical properties such as haze and transmission and thermal properties such as coefficient of thermal expansion) of the composition.

The following examples demonstrate the effect of the method of making the composition. Compositions were prepared according to the process indicated in Table 4.

Table 4

| Component | E61 | E62 | E63* | E64 | E65 | E66* | E67* | E68 | E69 | E70* | E71* |
|---|---|---|---|---|---|---|---|---|---|---|---|
| Process | 2 | 2 | 2 | 2 | 3 | 2 | 3 | 2 | 3 | 2 | 3 |
| PEI-1 | 60 | 60 | 60 | 60 | 60 | 60 | 60 | 60 | 60 | 60 | 60 |
| Kaolin 1 | | | | | | | | | | | |
| Kaolin 2 | | | | | | | | | | | |
| Calcium carbonate | | | | | | | | | | | |
| Wollastonite 1 | | 40 | | | | | | | | | |
| Wollastonite 2 | | | | | | | | | | | |
| Wollastonite 3 | | | 40 | | | 40 | 40 | | | | |
| Wollastonite 4 | 40 | | | 40 | 40 | | | | | | |
| AlO(OH)-1 | | | | | | | | | | | |
| AlO(OH)-2 | | | | | | | | | | | |
| AlO(OH)-3 | | | | | | | | | | | |
| AlO(OH)-4 | | | | | | | | 40 | 40 | | |
| AlO(OH)-5 | | | | | | | | | | 40 | 40 |
| Properties | | | | | | | | | | | |
| CTE (ppm/°C) | 21 | 24 | 36 | 21 | 22 | 36 | 31 | 33 | 31 | 38 | 37 |
| %Transmittance | 61 | 59 | 55 | 61 | 73 | 55 | 56 | 73 | 80 | 66 | 70 |
| % Filler by TGA | 39 | 40 | 38 | 39 | 40 | 38 | 39 | 40 | 40 | 40 | 40 |
| indicates a comparative example | | | | | | | | | | | |

A comparison of examples 61-67 and those made by process 1 with similar compositions in Table 2 show that certain compositions with a particular particle size and process method yield the desired properties with respect to CTE

and %T. Use of process 2 or 3 was also observed to provide enhanced dispersion and distribution of the filler in the composition compared to process 1. This can be observed by scanning electron microscopy for example as shown in FIG. 1 (SEM of example 8), FIG. 2 (SEM of example 61), and FIG. 3 (SEM of example 65). Similar results were obtained when using the boehmite filler, as shown in examples 68-71 of Table 4.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, saturated aliphatic hydrocarbon group, *e.g.,* methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (*e.g.,* ethenyl ($-HC=CH_2$)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (*e.g.,* methylene ($-CH_2-$) or, propylene ($-(CH_2)_3-$)). "Cycloalkylene" means a divalent cyclic alkylene group, $-C_nH_{2n-x}$, wherein x is the number of hydrogens replaced by cyclization(s). "Cycloalkenyl" means a monovalent group having one or more rings and one or more carbon-carbon double bonds in the ring, wherein all ring members are carbon (*e.g.,* cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (*e.g.,* benzyl). The prefix "halo" means a group or compound including one more of a fluoro, chloro, bromo, or iodo substituent. A combination of different halo atoms (*e.g.,* bromo and fluoro), or only chloro atoms can be present. The prefix "hetero" means that the compound or group includes at least one ring member that is a heteroatom (*e.g.,* 1, 2, or 3 heteroatom(s)), wherein the heteroatom(s) is each independently N, O, S, Si, or P. "Substituted" means that the compound or group is substituted with at least one (*e.g.,* 1, 2, 3, or 4) substituents that can each independently be a $C_{1-9}$ alkoxy, a $C_{1-9}$ haloalkoxy, a nitro ($-NO_2$), a cyano (-CN), a $C_{1-6}$ alkyl sulfonyl (-S(=O)z-alkyl), a $C_{6-12}$ aryl sulfonyl ($-S(=O)_2$-aryl), a thiol (-SH), a thiocyano (-SCN), a tosyl ($CH_3C_6H_4SO_2-$), a $C_{3-12}$ cycloalkyl, a $C_{2-12}$ alkenyl, a $C_{5-12}$ cycloalkenyl, a $C_{6-12}$ aryl, a $C_{7-13}$ arylalkylene, a $C_{4-12}$ heterocycloalkyl, and a $C_{3-12}$ heteroaryl instead of hydrogen, provided that the substituted atom's normal valence is not exceeded. The number of carbon atoms indicated in a group is exclusive of any substituents. For example $-CH_2CH_2CN$ is a $C_2$ alkyl group substituted with a nitrile.

Unless specified to the contrary herein, all test standards are the most recent standard in effect as of the filing date of this application, or, if priority is claimed, the filing date of the earliest priority application in which the test standard appears.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen

members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, saturated aliphatic hydrocarbon group, *e.g.,* methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (*e.g.,* ethenyl ($-HC=CH_2$)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (*e.g.,* methylene ($-CH_2-$) or, propylene ($-(CH_2)_3-$)). "Cycloalkylene" means a divalent cyclic alkylene group, $-C_nH_{2n-x}$, wherein x is the number of hydrogens replaced by cyclization(s). "Cycloalkenyl" means a monovalent group having one or more rings and one or more carbon-carbon double bonds in the ring, wherein all ring members are carbon (*e.g.,* cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (*e.g.,* benzyl). The prefix "halo" means a group or compound including one more of a fluoro, chloro, bromo, or iodo substituent. A combination of different halo atoms (*e.g.,* bromo and fluoro), or only chloro atoms can be present. The prefix "hetero" means that the compound or group includes at least one ring member that is a heteroatom (*e.g.,* 1, 2, or 3 heteroatom(s)), wherein the heteroatom(s) is each independently N, O, S, Si, or P. "Substituted" means that the compound or group is substituted with at least one (*e.g.,* 1, 2, 3, or 4) substituents that can each independently be a $C_{1-9}$ alkoxy, a $C_{1-9}$ haloalkoxy, a nitro ($-NO_2$), a cyano (-CN), a $C_{1-6}$ alkyl sulfonyl (-S(=O)z-alkyl), a $C_{6-12}$ aryl sulfonyl ($-S(=O)_2$-aryl), a thiol (-SH), a thiocyano (-SCN), a tosyl ($CH_3C_6H_4SO_2-$), a $C_{3-12}$ cycloalkyl, a $C_{2-12}$ alkenyl, a $C_{5-12}$ cycloalkenyl, a $C_{6-12}$ aryl, a $C_{7-13}$ arylalkylene, a $C_{4-12}$ heterocycloalkyl, and a $C_{3-12}$ heteroaryl instead of hydrogen, provided that the substituted atom's normal valence is not exceeded. The number of carbon atoms indicated in a group is exclusive of any substituents. For example $-CH_2CH_2CN$ is a $C_2$ alkyl group substituted with a nitrile.

## Claims

**1.** A composition comprising

greater than 50 weight percent to less than 75 weight percent of a polyetherimide, a poly(arylene ether sulfone), or a cyclic olefin copolymer; and
greater than 25 weight percent to less than 50 weight percent of a filler;
wherein
when the polymer comprises the polyetherimide, the filler comprises

wollastonite fibers having an average fiber diameter of 5 micrometers to 10 micrometers and an average fiber length of 55 micrometers to 75 micrometers, a surface area of 2.5 $m^2/g$ to less than 2.9 $m^2/g$, a bulk density of 0.42 g/cc to 0.50 g/cc, and a silica content of 52% to 55%; or
boehmite having an average particle size (D50), as determined by laser light scattering, of 0.4 micrometer to less than 0.9 micrometer;

when the polymer comprises the poly(arylene ether sulfone), the filler comprises

wollastonite fibers having an average fiber diameter of 1 micrometers to 5 micrometers and an average fiber length of 5 micrometers to 12 micrometers, a surface area of 3.8 $m^2/g$ to 4.3 $m^2/g$, and a bulk density of 0.48 g/cc to 0.56 g/cc; or
boehmite having an average particle size (D50), as determined by laser light scattering, of 0.4 micrometer to less than 0.9 micrometer; and

when the polymer comprises the cyclic olefin copolymer, the filler comprises
wollastonite fibers having an average fiber diameter of 10 micrometers to 15 micrometers and an average fiber length of 140 micrometers to 165 micrometers, a surface area of 1.0 $m^2/g$ to 1.8 $m^2/g$, and a bulk density of 0.18 g/cc to 0.26 g/cc;
wherein weight percent is based on the total weight of the composition.

**2.** The composition of claim 1, wherein a film formed from the composition exhibits

a flow coefficient of thermal expansion of less than or equal to 36 ppm/°C, or 5 ppm/°C to 36 ppm/°C, as

determined according to ASTM E831; and
a percent transmission of greater than 50%, or greater than 50% to 95%, at 1330 nm as determined by UV/Vis spectroscopy at a thickness of 100 micrometers.

**3.** The composition of claim 1 or 2, comprising

53 weight percent to 68 weight percent, or 55 weight percent to 65 weight percent, or 58 weight percent to 62 weight percent of the polyetherimide, the poly(arylene ether sulfone) or the cyclic olefin copolymer; and
32 weight percent to 47 weight percent, or 35 weight percent to 45 weight percent, or 38 weight percent to 42 weight percent of the filler.

**4.** The composition of any of claims 1 to 3, wherein the polyetherimide is present and the filler comprises the wollastonite, wherein a film formed from the composition exhibits

a flow coefficient of thermal expansion of less than or equal to 25 ppm/°C, or 5 ppm/°C to 25 ppm/°C, as determined according to ASTM D256; and
a percent transmission of greater than 50%, or greater than 50% to 95% at 1330 nanometers, as determined by UV/Vis spectroscopy at a thickness of 100 micrometers.

**5.** The composition of any of claims 1 to 3, wherein the polyetherimide is present and the filler comprises the boehmite, wherein a film formed from the composition exhibits

a flow coefficient of thermal expansion of less than or equal to 35 ppm/°C, or 5 ppm/°C to 35 ppm/°C, as determined according to ASTM D256; and
a percent transmission of greater than 75%, or greater than 75% to 95% at 1330 nanometers, as determined by UV/Vis spectroscopy at a thickness of 100 micrometers.

**6.** The composition of any of claims 1 to 3, wherein the poly(arylene ether sulfone) is present and the filler comprises the wollastonite, wherein a film formed from the composition exhibits

a flow coefficient of thermal expansion of less than or equal to 36 ppm/°C, or 5 ppm/°C to 36 ppm/°C, as determined according to ASTM E831; and
a percent transmission of greater than 50%, or greater than 50% to 95%, at 1330 nm as determined by UV/Vis spectroscopy at a thickness of 100 micrometers.

**7.** The composition of any of claims 1 to 3, wherein the poly(arylene ether sulfone) is present and the filler comprises the boehmite, wherein a film formed from the composition exhibits

a flow coefficient of thermal expansion of less than or equal to 35 ppm/°C, or 5 ppm/°C to 35 ppm/°C, as determined according to ASTM E831; and
a percent transmission of greater than 50%, or greater than 50% to 95%, at 1330 nm as determined by UV/Vis spectroscopy at a thickness of 100 micrometers.

**8.** The composition of any of claims 1 to 3, wherein the cyclic olefin copolymer is present and the filler comprises the wollastonite, wherein a film formed from the composition exhibits

a flow coefficient of thermal expansion of less than or equal to 35 ppm/°C, or 5 ppm/°C to 35 ppm/°C, as determined according to ASTM E831; and
a percent transmission of greater than 50%, or greater than 50% to 95%, at 1330 nm as determined by UV/Vis spectroscopy at a thickness of 100 micrometers.

**9.** A method of making the composition of any of claims 1 to 8, the method comprising:
blending the polyetherimide, the poly(arylene ether sulfone), or the cyclic olefin copolymer and the filler.

**10.** The method of claim 9, wherein blending the polyetherimide, the poly(arylene ether sulfone), or the cyclic olefin copolymer and the filler is in the presence of a solvent.

**11.** The method of claim 9 or 10, wherein blending the polyetherimide, the poly(arylene ether sulfone), or the cyclic

olefin copolymer and the filler is at a temperature of 20 to 200 °C, preferably 20 to 25 °C or 175 to 200 °C.

**12.** A method of making the composition of any of claims 1 to 8, wherein the composition comprises the polyetherimide and the method comprises:

contacting an aromatic bis(ether anhydride) and an organic amine to provide a polyetherimide precursor;
combining the filler with the polyetherimide precursor to provide a mixture; and
heating the mixture under conditions effective to provide the corresponding polyetherimide.

**13.** An article comprising the composition of any of claims 1 to 8.

**14.** The article of claim 13, wherein the article is an optical article, preferably an optic lens, a lens array, transparent materials applications in medical devices, electronic and telecommunications, building and constructions, sensors, antennas, electrodes, thin film optics, thin film substrates, transistors and IR transparent display devices.

**Patentansprüche**

**1.** Zusammensetzung umfassend

mehr als 50 Gewichtsprozent bis weniger als 75 Gewichtsprozent eines Polyetherimids, eines Poly(arylenethersulfons) oder eines zyklischen Olefin-Copolymers; und mehr als 25 Gewichtsprozent bis weniger als 50 Gewichtsprozent eines Füllstoffs;
wobei,
wenn das Polymer das Polyetherimid umfasst, der Füllstoff Folgendes umfasst:

Wollastonitfasern mit einem durchschnittlichen Faserdurchmesser von 5 Mikrometern bis 10 Mikrometern und einer durchschnittlichen Faserlänge von 55 Mikrometern bis 75 Mikrometern, einer Oberfläche von 2,5 $m^2/g$ bis weniger als 2,9 $m^2/g$, einer Schüttdichte von 0,42 $g/cm^3$ bis 0,50 $g/cm^3$ und einem Siliciumdioxidgehalt von 52% bis 55%; oder
Böhmit mit einer durchschnittlichen Teilchengröße (D50), bestimmt durch Laserlichtstreuung, von 0,4 Mikrometer bis weniger als 0,9 Mikrometer;

wenn das Polymer das Poly(arylenethersulfon) umfasst, der Füllstoff Folgendes umfasst:

Wollastonitfasern mit einem durchschnittlichen Faserdurchmesser von 1 Mikrometer bis 5 Mikrometer und einer durchschnittlichen Faserlänge von 5 Mikrometer bis 12 Mikrometer, einer Oberfläche von 3,8 $m^2/g$ bis 4,3 $m^2/g$ und einer Schüttdichte von 0,48 $g/cm^3$ bis 0,56 $g/cm^3$ umfasst; oder
Böhmit mit einer durchschnittlichen Teilchengröße (D50), bestimmt durch Laserlichtstreuung, von 0,4 Mikrometer bis weniger als 0,9 Mikrometer; und

wenn das Polymer das zyklische Olefin-Copolymer umfasst, der Füllstoff Folgendes umfasst:
Wollastonitfasern mit einem durchschnittlichen Faserdurchmesser von 10 Mikrometern bis 15 Mikrometern und einer durchschnittlichen Faserlänge von 140 Mikrometern bis 165 Mikrometern, einer Oberfläche von 1,0 $m^2/g$ bis 1,8 $m^2/g$ und einer Schüttdichte von 0,18 $g/cm^3$ bis 0,26 $g/cm^3$;
wobei die Gewichtsprozente auf das Gesamtgewicht der Zusammensetzung bezogen sind.

**2.** Zusammensetzung nach Anspruch 1, wobei ein aus der Zusammensetzung gebildeter Film Folgendes aufweist:

einen Fließkoeffizienten der thermischen Ausdehnung von weniger als oder bis zu 36 ppm/°C oder 5 ppm/°C bis 36 ppm/°C, bestimmt nach ASTM E831; und
eine prozentuale Transmission von mehr als 50%, oder mehr als 50% bis 95%, bei 1330 nm, bestimmt durch UV/Vis-Spektroskopie bei einer Dicke von 100 Mikrometern.

**3.** Die Zusammensetzung nach Anspruch 1 oder 2, umfassend

53 Gewichtsprozent bis 68 Gewichtsprozent, oder 55 Gewichtsprozent bis 65 Gewichtsprozent, oder 58 Gewichtsprozent bis 62 Gewichtsprozent des Polyetherimids, des Poly(arylenethersulfons) oder des zyklischen

Olefin-Copolymers; und
32 Gewichtsprozent bis 47 Gewichtsprozent, oder 35 Gewichtsprozent bis 45 Gewichtsprozent, oder 38 Gewichtsprozent bis 42 Gewichtsprozent des Füllstoffs.

**4.** Zusammensetzung nach einem der Ansprüche 1 bis 3, wobei das Polyetherimid vorhanden ist und der Füllstoff das Wollastonit umfasst, wobei ein aus der Zusammensetzung gebildeter Film Folgendes aufweist:

einen Fließkoeffizienten der thermischen Ausdehnung von weniger als oder bis zu 25 ppm/°C oder 5 ppm/°C bis 25 ppm/°C, bestimmt nach ASTM D256; und
eine prozentuale Transmission von mehr als 50 % oder mehr als 50 % bis 95 % bei 1330 Nanometern, bestimmt durch UV/Vis-Spektroskopie bei einer Dicke von 100 Mikrometern.

**5.** Zusammensetzung nach einem der Ansprüche 1 bis 3, wobei das Polyetherimid vorhanden ist und der Füllstoff das Böhmit umfasst, wobei ein aus der Zusammensetzung gebildeter Film Folgendes aufweist:

einen Fließkoeffizienten der thermischen Ausdehnung von weniger als oder bis zu 35 ppm/°C, oder 5 ppm/°C bis 35 ppm/°C, bestimmt nach ASTM D256; und
eine prozentuale Transmission von mehr als 75 %, oder mehr als 75 % bis 95 % bei 1330 Nanometern, bestimmt durch UV/Vis-Spektroskopie bei einer Dicke von 100 Mikrometern.

**6.** Zusammensetzung nach einem der Ansprüche 1 bis 3, wobei das Poly(arylenethersulfon) vorhanden ist und der Füllstoff das Wollastonit umfasst, wobei ein aus der Zusammensetzung gebildeter Film Folgendes aufweist:

einen Fließkoeffizienten der thermischen Ausdehnung von weniger als oder bis zu 36 ppm/°C, oder 5 ppm/°C bis 36 ppm/°C, bestimmt nach ASTM E831; und
eine prozentuale Transmission von mehr als 50%, oder mehr als 50% bis 95%, bei 1330 nm, bestimmt durch UV/Vis-Spektroskopie bei einer Dicke von 100 Mikrometern.

**7.** Zusammensetzung nach einem der Ansprüche 1 bis 3, wobei das Poly(arylenethersulfon) vorhanden ist und der Füllstoff das Böhmit umfasst, wobei ein aus der Zusammensetzung gebildeter Film Folgendes aufweist:

einen Fließkoeffizienten der thermischen Ausdehnung von weniger als oder bis zu 35 ppm/°C, oder 5 ppm/°C bis 35 ppm/°C, bestimmt nach ASTM E831, aufweist;
eine prozentuale Transmission von mehr als 50%, oder mehr als50 % bis 95%, bei 1330 nm, bestimmt durch UV/Vis-Spektroskopie bei einer Dicke von 100 Mikrometern.

**8.** Zusammensetzung nach einem der Ansprüche 1 bis 3, wobei das zyklische Olefin-Copolymer vorhanden ist und der Füllstoff das Wollastonit umfasst, wobei ein aus der Zusammensetzung gebildeter Film Folgendes aufweist:

einen Fließkoeffizienten der thermischen Ausdehnung von weniger als oder gleich 35 ppm/°C, oder 5 ppm/°C bis 35 ppm/°C, bestimmt nach ASTM E831; und
eine prozentuale Transmission von mehr als 50%, oder mehr als 50% bis 95%, bei 1330 nm, bestimmt durch UV/Vis-Spektroskopie bei einer Dicke von 100 Mikrometern.

**9.** Verfahren zur Herstellung der Zusammensetzung nach einem der Ansprüche 1 bis 8, wobei das Verfahren umfasst: Mischen des Polyetherimids, des Poly(arylenethersulfons) oder des cyclischen Olefin-Copolymers und des Füllstoffs.

**10.** Verfahren nach Anspruch 9, wobei das Mischen des Polyetherimids, des Poly(arylenethersulfons) oder des cyclischen Olefin-Copolymers und des Füllstoffs in Gegenwart eines Lösungsmittels erfolgt.

**11.** Verfahren nach Anspruch 9 oder 10, wobei das Mischen des Polyetherimids, des Poly(arylenethersulfons) oder des zyklischen Olefin-Copolymers und des Füllstoffs bei einer Temperatur von 20 bis 200 °C, vorzugsweise 20 bis 25 °C oder 175 bis 200 °C erfolgt.

**12.** Verfahren zur Herstellung der Zusammensetzung nach einem der Ansprüche 1 bis 8, wobei die Zusammensetzung das Polyetherimid umfasst und das Verfahren Folgendes umfasst:

Inkontaktbringen eines aromatischen Bis(etheranhydrids) und eines organischen Amins, um einen Polyetherimid-Vorläufer bereitzustellen;
Kombinieren des Füllstoffs mit dem Polyetherimid-Vorläufer, um ein Gemisch bereitzustellen; und
Erhitzen des Gemischs unter Bedingungen, die wirksam sind, um das entsprechende Polyetherimid bereitzustellen.

**13.** Gegenstand, umfassend die Zusammensetzung nach einem der Ansprüche 1 bis 8.

**14.** Gegenstand nach Anspruch 13, wobei der Gegenstand ein optischer Gegenstand ist, vorzugsweise eine optische Linse, ein Linsenarray, transparente Materialien, die in medizinischen Geräten, in der Elektronik und Telekommunikation, im Bauwesen und in Konstruktionen, in Sensoren, Antennen, Elektroden, in der Dünnschichtoptik, in Dünnschichtsubstraten, in Transistoren und in transparenten IR-Anzeigegeräten verwendet werden.

## Revendications

**1.** Composition comprenant

plus de 50 % en poids à moins de 75 % en poids d'un polyétherimide, d'un poly(arylène éther sulfone) ou d'un copolymère d'oléfine cyclique ; et
plus de 25 % en poids à moins de 50 % en poids d'une charge ;
où
lorsque le polymère comprend le polyétherimide, la charge comprend

des fibres de wollastonite ayant un diamètre moyen de fibre de 5 micromètres à 10 micromètres et une longueur moyenne de fibre de 55 micromètres à 75 micromètres, une surface de contact de 2,5 $m^2/g$ à moins de 2,9 $m^2/g$, une densité apparente de 0,42 g/cc à 0,50 g/cc, et une teneur en silice de 52 % à 55 % ; ou
de la boehmite ayant une taille moyenne de particule (D50), déterminée par diffusion de la lumière laser, de 0,4 micromètre à moins de 0,9 micromètre ;

lorsque le polymère comprend le poly(arylène éther sulfone), la charge comprend

des fibres de wollastonite ayant un diamètre moyen de fibre de 1 micromètre à 5 micromètres et une longueur moyenne de fibre de 5 micromètres à 12 micromètres, une surface de contact de 3,8 $m^2/g$ à 4,3 $m^2/g$ et une densité apparente de 0,48 g/cc à 0,56 g/cc ; ou
de la boehmite ayant une taille moyenne de particule (D50), déterminée par diffusion de la lumière laser, de 0,4 micromètre à moins de 0,9 micromètre ; et

lorsque le polymère comprend le copolymère d'oléfine cyclique, la charge comprend
des fibres de wollastonite ayant un diamètre moyen de fibre de 10 micromètres à 15 micromètres et une longueur moyenne de fibre de 140 micromètres à 165 micromètres, une surface de contact de 1,0 $m^2/g$ à 1,8 $m^2/g$, et une densité apparente de 0,18 g/cc à 0,26 g/cc ;
le pourcentage en poids étant basé sur le poids total de la composition.

**2.** Composition selon la revendication 1, dans laquelle un film formé à partir de la composition présente

un coefficient de flux de dilatation thermique inférieur ou égal à 36 ppm/°C, ou de 5 ppm/°C à 36 ppm/°C, déterminé selon la norme ASTM E831 ; et
un pourcentage de transmission supérieur à 50 %, ou supérieur à 50 % et jusqu'à 95 %, à 1 330 nm, déterminé par spectroscopie UV/Vis à une épaisseur de 100 micromètres.

**3.** Composition selon la revendication 1 ou 2, comprenant

de 53 % en poids à 68 % en poids, ou de 55 % en poids à 65 % en poids, ou de 58 % en poids à 62 % en poids du polyétherimide, du poly(arylène éther sulfone) ou du copolymère d'oléfine cyclique ; et
de 32 % en poids à 47 % en poids, ou de 35 % en poids à 45 % en poids, ou de 38 % en poids à 42 % en poids de la charge.

**4.** Composition selon l'une quelconque des revendications 1 à 3, dans laquelle le polyétherimide est présent et la charge comprend la wollastonite, un film formé à partir de la composition présentant

un coefficient de flux de dilatation thermique inférieur ou égal à 25 ppm/°C, ou de 5 ppm/°C à 25 ppm/°C, tel déterminé selon la norme ASTM D256 ; et
un pourcentage de transmission supérieur à 50 %, ou supérieur à 50 % et jusqu'à 95 % à 1 330 nanomètres, déterminé par spectroscopie UV/Vis à une épaisseur de 100 micromètres.

**5.** Composition selon l'une quelconque des revendications 1 à 3, dans laquelle le polyétherimide est présent et la charge comprend la boehmite, un film formé à partir de la composition présentant

un coefficient de flux de dilatation thermique inférieur ou égal à 35 ppm/°C, ou de 5 ppm/°C à 35 ppm/°C, déterminé selon la norme ASTM D256 ; et
un pourcentage de transmission supérieur à 75 %, ou supérieur à 75 % et jusqu'à 95 % à 1 330 nanomètres, déterminé par spectroscopie UV/Vis à une épaisseur de 100 micromètres.

**6.** Composition selon l'une quelconque des revendications 1 à 3, dans laquelle le poly(arylène éther sulfone) est présent et la charge comprend la wollastonite, un film formé à partir de la composition présentant

un coefficient de flux de dilatation thermique inférieur ou égal à 36 ppm/°C, ou de 5 ppm/°C à 36 ppm/°C, déterminé selon la norme ASTM E831 ; et
un pourcentage de transmission supérieur à 50 %, ou supérieur à 50 % et jusqu'à 95 %, à 1 330 nm, déterminé par spectroscopie UV/Vis à une épaisseur de 100 micromètres.

**7.** Composition selon l'une quelconque des revendications 1 à 3, dans laquelle le poly(arylène éther sulfone) est présent et la charge comprend la boehmite, un film formé à partir de la composition présentant

un coefficient de flux de dilatation thermique inférieur ou égal à 35 ppm/°C, ou de 5 ppm/°C à 35 ppm/°C, déterminé selon la norme ASTM E831 ; et
un pourcentage de transmission supérieur à 50 %, ou supérieur à 50 % et jusqu'à 95 %, à 1 330 nm, déterminé par spectroscopie UV/Vis à une épaisseur de 100 micromètres.

**8.** Composition selon l'une quelconque des revendications 1 à 3, dans laquelle le copolymère d'oléfine cyclique est présent et la charge comprend la wollastonite, un film formé à partir de la composition présentant

un coefficient de flux de dilatation thermique inférieur ou égal à 35 ppm/°C, ou de 5 ppm/°C à 35 ppm/°C, déterminé selon la norme ASTM E831 ; et
un pourcentage de transmission supérieur à 50 %, ou supérieur à 50 % et jusqu'à 95 %, à 1 330 nm, déterminé par spectroscopie UV/Vis à une épaisseur de 100 micromètres.

**9.** Procédé de fabrication de la composition selon l'une quelconque des revendications 1 à 8, le procédé comprenant : le mélange du polyétherimide, du poly(arylène éther sulfone), ou du copolymère d'oléfine cyclique et de la charge.

**10.** Procédé selon la revendication 9, dans lequel le mélange du polyétherimide, du poly(arylène éther sulfone), ou du copolymère d'oléfine cyclique et de la charge se fait en présence d'un solvant.

**11.** Procédé selon la revendication 9 ou 10, dans lequel le mélange du polyétherimide, du poly(arylène éther sulfone), ou du copolymère d'oléfine cyclique et de la charge se fait à une température comprise entre 20 et 200°°C, de préférence entre 20 et 25°°C ou entre 175 et 200°°C.

**12.** Procédé de fabrication de la composition selon l'une quelconque des revendications 1 à 8, dans lequel la composition comprend le polyétherimide, et le procédé comprend :

la mise en contact d'un bis(éther anhydride) aromatique et d'une amine organique pour fournir un précurseur de polyétherimide ;
la combinaison de la charge avec le précurseur de polyétherimide pour fournir un mélange ; et
le chauffage du mélange dans des conditions permettant de fournir le polyétherimide correspondant.

**13.** Article comprenant la composition selon l'une quelconque des revendications 1 à 8.

**14.** Article selon la revendication 13, dans lequel l'article est un article optique, de préférence une lentille optique, un réseau de lentilles, des applications de matériaux transparents dans des dispositifs médicaux, électroniques et de télécommunications, bâtiments et constructions, capteurs, antennes, électrodes, optiques en couches minces, substrats en couches minces, transistors et dispositifs d'affichage transparents !R.

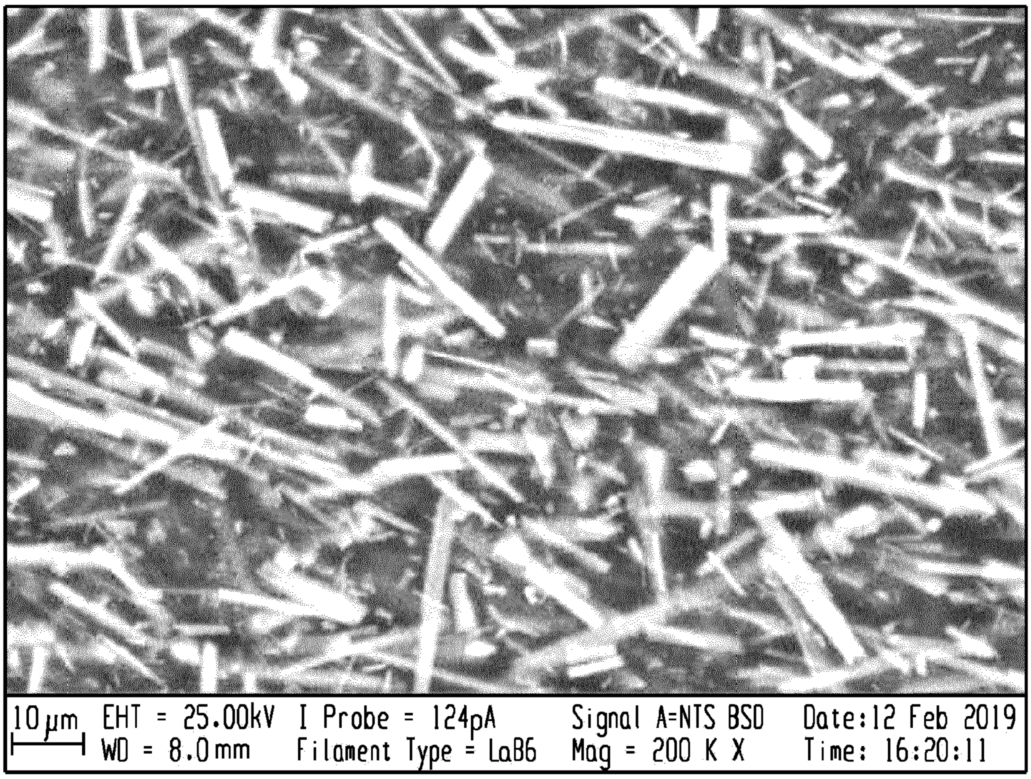
10 µm
EHT = 25.00kV
WD = 8.0 mm
I Probe = 124pA
Filament Type = LaB6
Signal A=NTS BSD
Mag = 200 K X
Date:12 Feb 2019
Time: 16:20:11

Fig. 1

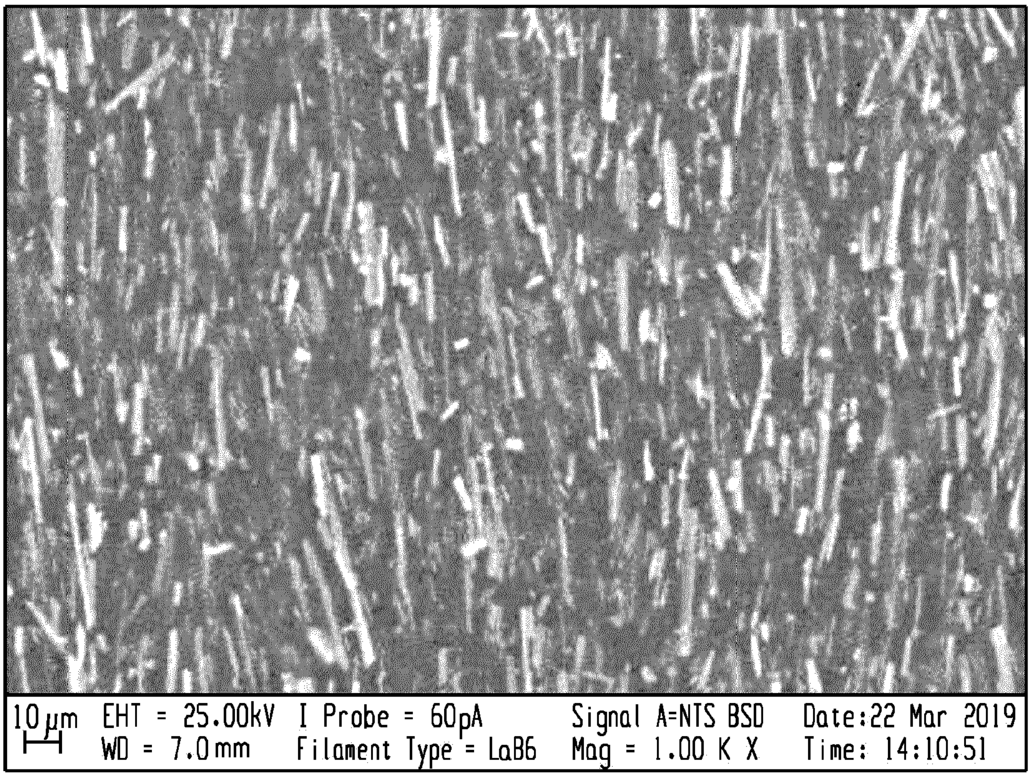
10 µm
EHT = 25.00kV
WD = 7.0 mm
I Probe = 60pA
Filament Type = LaB6
Signal A=NTS BSD
Mag = 1.00 K X
Date:22 Mar 2019
Time: 14:10:51

Fig. 2

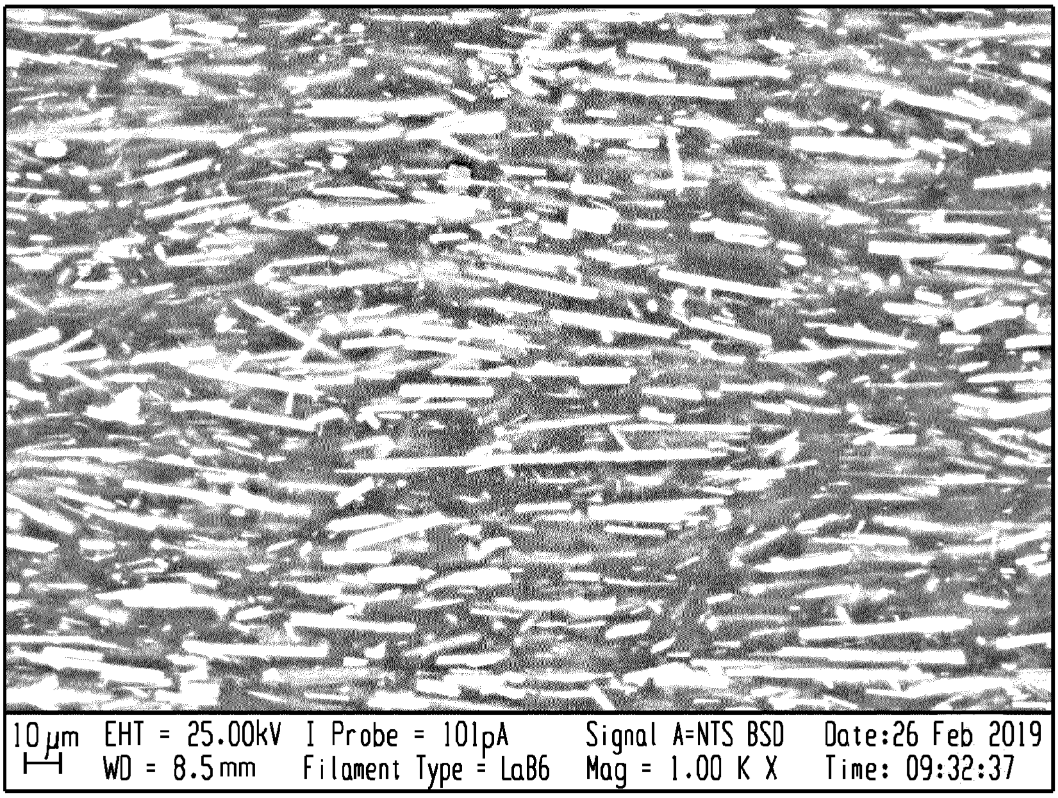
10 μm EHT = 25.00kV I Probe = 101pA Signal A=NTS BSD Date:26 Feb 2019
WD = 8.5mm Filament Type = LaB6 Mag = 1.00 K X Time: 09:32:37

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2020140717 A1
- US 2020332121 A1
- US 4176222 A
- US 5008356 A

### Non-patent literature cited in the description

- *CHEMICAL ABSTRACTS,* 26007-43-2